# EUROPEAN PATENT APPLICATION

(11) **EP 3 772 175 A1**
(43) Date of publication of application: **03.02.2021**
(21) Application number: 19189662.0
(22) Date of filing: 01.08.2019
(51) Int. Cl.: H02S 20/23

(54) **WATERPROOF STRUCTURE FOR SOLAR PANEL ROOF AND SOLAR PANEL WALL**

(71) Applicant: Hsueh, Lien-Feng, Tainan City 741 (TW)
(72) Inventor: Hsueh, Lien-Feng, Tainan City 741 (TW)
(74) Representative: 2K Patentanwälte Blasberg Kewitz & Reichel

(57) **Abstract**

A waterproof structure for solar panel roof and solar panel wall (100), comprising a plurality of support units (10) disposed along a first direction (Y) and comprising at least one first drainage channel (13), a plurality of spacing units (20) disposed on the support units (10) along a second direction of (X) and comprising a second drainage channel (21), a plurality of solar panel modules (30), a plurality of first waterproof fixing units (40), a plurality of second waterproof fixing units (50), and a plurality of fastening units (60); the plurality of support units (10) and the plurality of spacing units (20) form a plurality of accommodating spaces (70) of a matrix arrangement for accommodating the plurality of solar panel modules (30); the plurality of first waterproof fixing units (40) are disposed on the plurality of spacing units (20), and the plurality of second waterproof fixing units (50) are disposed on the plurality of support units (10), so that rainwater slides down along an inclination of the solar panel module (30) and flows towards a lower place through the first drainage channel (13) and the second drainage channels (21).

## Description

### FIELD OF THE INVENTION

The present invention relates to a waterproof structure, and more particularly to a waterproof connection structure for a solar panel roof and a solar panel wall which has functions of electric power generation by solar power and waterproof.

### BACKGROUND OF THE INVENTION

In recent years, the awareness of environmental protection in the international community has raised gradually, in order to reduce the pollution caused by electric power generation by firepower and nuclear power, research institutes in various countries have proposed to replace high-pollution energy with renewable energy. In renewable energy, electric power generation by solar power has attracted attention because of its low costs as well as simple and convenient construction. At present, the most common method for generating electric power by solar power is to install solar panels in the idle area of the top floor of a building, and convert the light energy into electric energy by photoelectric semiconductors to be stored, and the electric energy generated is sufficient for general household use to save energy. Specifically, the conventional method of installing solar panels is to set up grids on the top floor, and gratings are formed on the top surface of the grids. Then, solar panels are embedded into the gratings on the grids. However, when it rains, the rainwater will leak from the gap between the solar panels and the grids. The various slits inside the grids will cause rust over time due to the moisture, resulting in the whole grid must be taken down for replacement during maintenance, which is not only labor-consuming and time-consuming but it also wastes building materials.

Taiwan Patent No. M464492 provides a waterproof structure for solar photoelectric panel grid, which mainly comprises a grid, which is composed of a plurality of steel frames, a plurality of grid holes are formed on a top surface of the grid, and a plurality of solar panels are laid on the grid. A waterproof partition layer is disposed under the solar panels, and the waterproof partition layer is composed of a water-impermeable laminate to achieve the effect of preventing rainwater leakage.

However, in the above prior art, the entire roof surface is covered by the grid, and a large-area waterproof partition layer is required. Since the waterproof partition layer is in a flat plate shape, the larger the area, the more difficult to maintain the flatness after construction. Besides that the large-scale grid is not easy for construction after the set up is completed, the grid is prone to rust after long-term exposure to the sun and rain, which causes the entire grid must be removed from the roof when the roof needs to be repaired. Because the areas of planes of the grid and the waterproof partition layer are large, the degree of warped deformation is difficult to predict. Such problems indirectly increase the costs of installing the solar panels. If a waterproof component is added between solar panel and the grating, not only additional materials are required, but also difficulties in construction are encountered, which is not ideal. Therefore, there is a need for improvement in the prior art.

### SUMMARY OF THE INVENTION

An object of the present invention is to solve the problems that the metal grid of the prior art described above is susceptible to rust due to lack of waterproof ability, and that the large-area flat-shaped work piece is easily bent and deformed, resulting in difficulty in construction.

In order to achieve the above object, the present invention provides a waterproof structure for solar panel roof and solar panel wall, which is disposed on a roof top surface and a wall surface of a building, and includes a plurality of support units disposed along a first direction, a plurality of spacing units disposed on the plurality of support units along a second direction, a plurality of solar panel modules, a plurality of first waterproof fixing units, a plurality of second waterproof fixing units, and a plurality of fastening units. Each of the support units includes two support sections, a connecting section connected between the two support sections and closer to the roof top surface and the wall surface of the building than the two support sections, and at least one first drainage channel. The plurality of first drainage channels are respectively connected to a side of the support section away from the connecting section. The plurality of spacing units are disposed on any adjacent two of the plurality of support units, and each of the spacing units includes a second drainage channel and a opening, and the opening is disposed along the second direction and connects with the second drainage channel, wherein the first direction and the second direction crisscross with each other, and the plurality of support units and the plurality of spacing units form a plurality of accommodating spaces of a matrix arrangement. The plurality of solar panel modules are accommodated in the corresponding plurality of accommodating spaces and abut plurality of the support units and the plurality of spacing units. The first waterproof fixing unit comprises a plate and two first extending portions respectively protruded and extended from the same side of the plate, wherein at least one of the first extending portions forms an engaging portion at an end of the first extending portions away from the plate. The second waterproof fixing units are disposed on the plurality of support units, clamping and pressing the plurality of solar panel modules accommodated in the plurality of accommodating spaces. The plurality of fastening units fasten the second waterproof fixing units to the connecting sections of the plurality of support units; wherein a side wall of the spacing unit adjacent to the opening and the solar panel module, and the side wall is provided with a limit portion, and the limit portion and the engaging portion of the first waterproof fixing unit abut against each other to form a fixing structure.

Further, the second waterproof fixing unit comprises a fixing portion, two second extending portions, and at least one press portion. The fixing portion is disposed corresponding to the connecting section of the support unit. The second extending portions are respectively extended from two ends of the fixing portion to a position of a top surface of the solar panel module. The press portion protrudes from the second extending portion along the top surface of the solar panel module and limits the solar panel module.

Further, an end of each of the plurality of second drainage channels connects with the first drainage channel.

Further, the limit portion is a stepped difference formed by the side wall of the spacing unit being further recessed toward the solar panel module.

Further, the engaging portion forms a barb corresponding to the stepped difference corresponding to the limit portion.

Further, two of the spacing units are disposed between the plurality of solar panel modules along the first direction.

Further, each of the two first extending portions of the first waterproof fixing unit forms the engaging portion at an end of the first waterproof fixing unit away from the plate, and the engaging portions respectively abut the limit portion of the plurality of spacing units.

Further, the second drainage channel is further provided with a reinforcing rib.

Therefore, the present invention has the following beneficial effects over the prior art:
1. In the present invention, the solar panel module is clamped and pressed between the support unit, the spacing unit and the second waterproof fixing unit to improve the problem of difficulty in construction and repair caused by the use of large-area steel plates as the grid for the plurality of solar panels in the prior art.
2. Through the first waterproof fixing unit and the second waterproof fixing unit of the present invention, when one of the plurality of solar panel modules needs to be taken down for replacement, only need to remove the first waterproof fixing unit and the second waterproof fixing unit between the plurality of solar panel modules adjacent to each other, and the single-piece solar panel module can be removed for repair or replacement.
3. Through the first drainage channel recessed on the support unit and the second drainage channel communicating the first drainage channel, rainwater falling on the roof is able to be discharged naturally along the first drainage channel or the second drainage channel by the present invention.
4. The present invention reduces rainwater from falling on the roof top surface and wall surfaces of the building through the first waterproof fixing unit and the second waterproof fixing unit, and allows the rainwater to be discharged through the first drainage channel and the second drainage channel, waterproof members such as rubber strips and seal rings are not required to be additionally added to prevent rainwater from seeping into the roof top surfaces and wall surfaces of the building and then infiltrating into the building, thereby the present invention has the advantage of waterproofing.

### BRIEF DESCRIPTION OF THE DRAWINGS

FIG. 1 is a combination view of the present invention being disposed on roof top surfaces and wall surfaces of a building;
FIG. 2 is a partial exploded view of the present invention being disposed on the roof top surface in FIG. 1;
FIG. 3A is a combination view of the present invention being disposed on the roof top surface in FIG. 1;
FIG. 3B is a partial enlarged view of 3B indicated in FIG. 3A;
FIG. 3C is a partial enlarged view of 3C indicated in FIG. 3A;
FIG. 4A is a partial combination view of the present invention being disposed on the wall surface in FIG. 1;
FIG. 4B is a sectional view of FIG. 4A along 4B-4B direction;
FIG. 4C is a sectional view of FIG. 4A along 4C-4C direction;
FIG. 4D is a sectional view of FIG. 4A along 4D-4D direction;
FIG. 4E is a sectional view of FIG. 4A along 4E-4E direction;
FIG. 5 is a schematic view of the state of use of an embodiment of the present invention being disposed on the roof top surface of the building;
FIG. 6 is a schematic view of the state of use of an embodiment of the present invention being disposed on the wall surface of the building;
FIG. 7A is a schematic view of the state of use of an embodiment of the present invention when rainwater flows along 4C-4C direction of FIG. 4A; and
FIG. 7B is a partial enlarged view of the circled portion of Fig.7A.

### DETAILED DESCRIPTION OF THE PREFERRED EMBODIMENTS

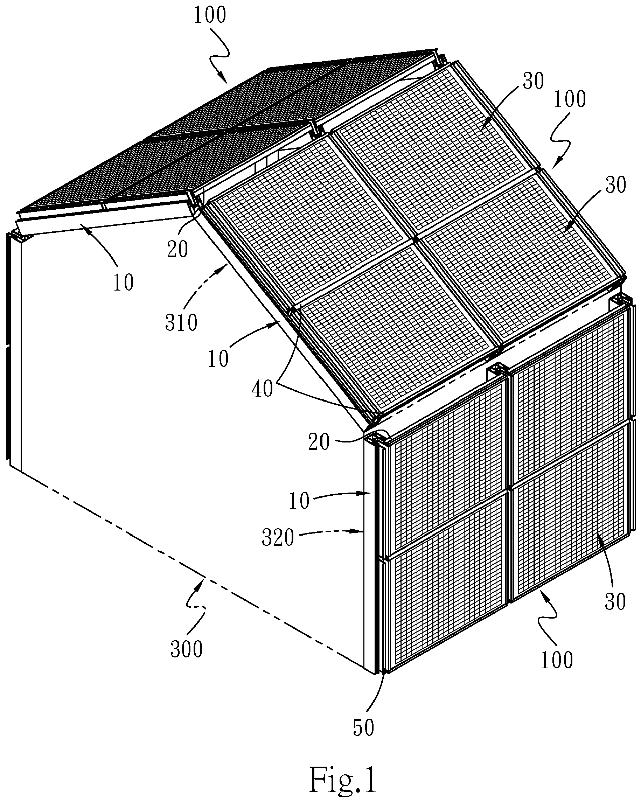

Please refer to FIG. 1 to FIG. 4E regarding the techniques of the present invention, a waterproof structure for solar panel roof and solar panel wall 100 of the present invention is disposed on a roof top surface 310 and a wall surface 320 of a building 300, the building 300 is a farmhouse, a greenhouse or a general house, and the waterproof structure for solar panel roof and solar panel wall 100 allows the building 300 to have not only the function of blocking rainwater but also the function of electric power generation by solar power. The waterproof structure for solar panel roof and solar panel wall 100 includes a plurality of support units 10 disposed along a first direction Y, a plurality of spacing units 20 disposed on the plurality of support units 10 along a second direction X, a plurality of solar panel modules 30, a plurality of first waterproof fixing units 40, a plurality of second waterproof fixing units 50, and a plurality of fastening units 60.

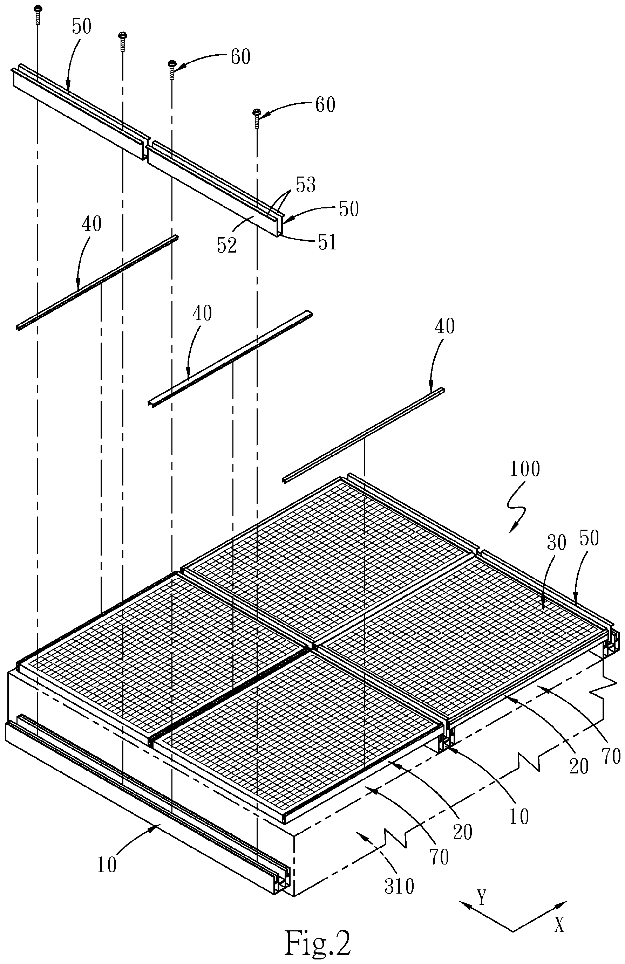

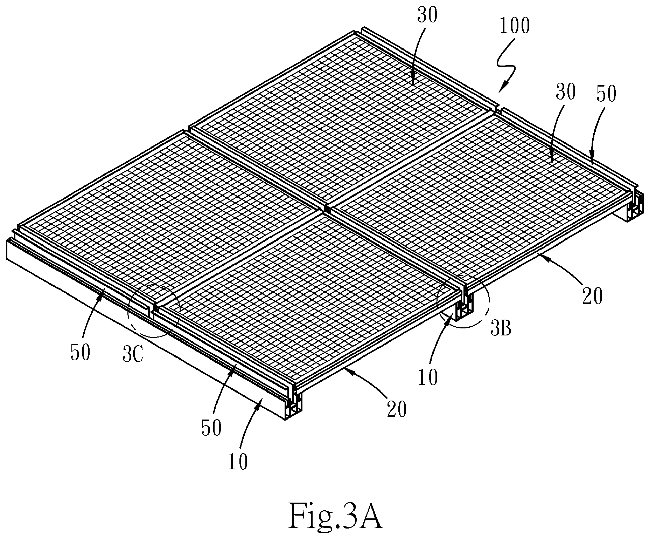

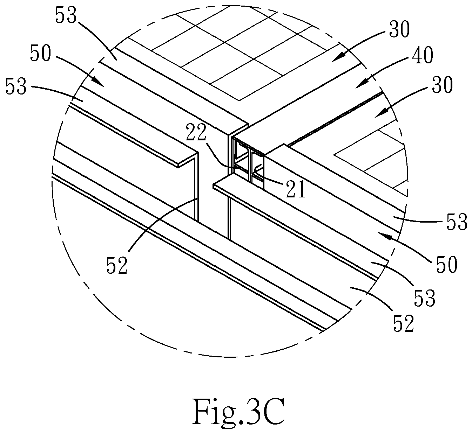

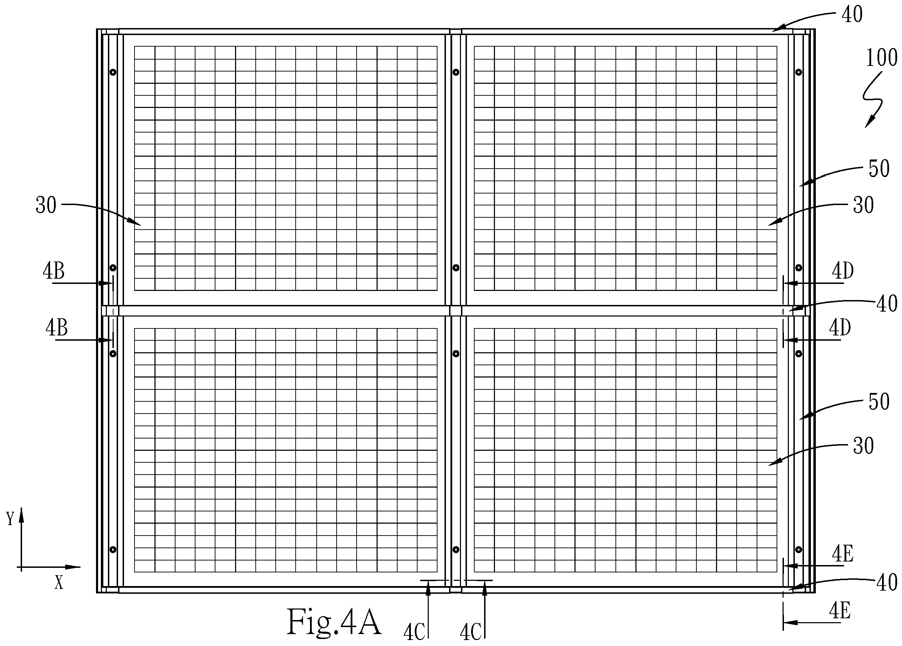

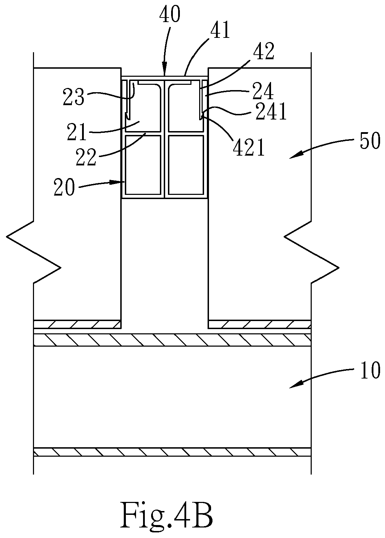

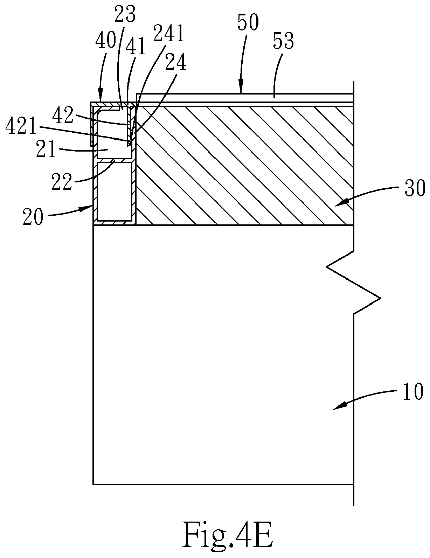

For detailed description, please refer to FIG. 2, FIG. 3B and FIG. 4C, each of the plurality of support units 10 includes two support sections 11, a connecting section 12 connected between the two support sections 11 and closer to the roof top surface 310 and the wall surface 320 of the building 300 than the two support sections 11, and two first drainage channels 13. The plurality of first drainage channels 13 are respectively connected to a side of the support section 11 away from the connecting section 12, and the support sections 11 are used to support the disposed solar panel modules 30. Please refer to FIG. 3C, FIG. 4A, FIG. 4B and FIG. 4E, the spacing units 20 are disposed on the two of the plurality of support units 10 adjacent to each other, and each of the plurality of spacing units 20 includes a second drainage channel 21, a reinforcing rib 22 and a opening 23, and the opening 23 is formed along the second direction X and connects with the second drainage channel 21, wherein the first direction of Y and the second direction X crisscross with each other, and the plurality of support units 10 and the plurality of spacing units 20 form a plurality of accommodating spaces 70 of a matrix arrangement. The plurality of solar panel modules 30 are accommodated in the corresponding plurality of accommodating spaces 70 and abut the plurality of support units 10 and the spacing units 20. The first waterproof fixing unit 40 comprises a plate 41 and two first extending portions 42. The two extending portions 42 respectively protruded and extended from the same side of the plate 41, wherein each of the first extending portions 42 forms an engaging portion 421 at an end of the first extending portions 42 away from the plate 41. The second waterproof fixing units 50 are disposed on the support units 10, clamping and pressing to accommodate in the accommodating spaces 70. The plurality of fastening units 60 fasten the plurality of second waterproof fixing units 50 to the connecting sections 12 of the support units 10. A side wall 24 of the spacing unit 20 adjacent to the opening 23 and the solar panel module 30 and the side wall 24 is provided with a limit portion 241. The limit portion 241 is a stepped difference formed by the side wall 24 of the spacing unit 20, and the side wall 24 is adjacently connected to the solar panel module 30, being further recessed toward the solar panel module 30, and the limit portion 241 and the engaging portion 421 of the first waterproof fixing unit 40 abut against each other to form a fixing structure. The engaging portion 421 further forms a barb corresponding to the stepped difference formed by the limit portion 241. Please refer to FIG. 4B, two of the spacing units 20 are disposed between the plurality of solar panel modules 30adjacent to each other along the first direction (Y). Therefore, each of the two first extending portions 42 of the first waterproof fixing unit 40 forms the engaging portion 421 at an end of the first waterproof fixing unit 40 away from the plate 41, so that the first extending portions 42 of the first waterproof fixing unit 40 pass through the ports 23 of the two spacing units 20 between the two solar panel modules 30, and the plurality of engaging portions 421 are respectively engaged and fixed at the limit portion 241 of the corresponding spacing unit 20. It should be noted that the waterproof structure for solar panel roof and solar panel wall 100 can be constructed as the roof top surface 310 and the wall surface 320 of the building 300 which are composed by planes, inclined planes or irregular planes in practical use, and are not limited herein.

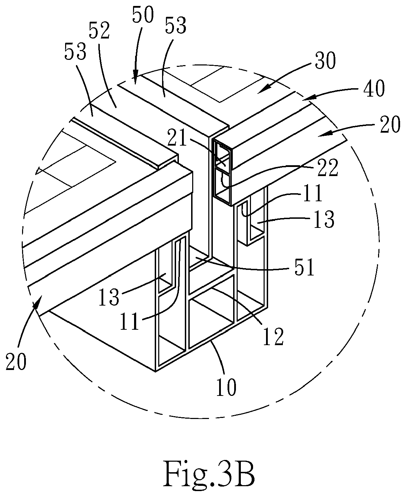

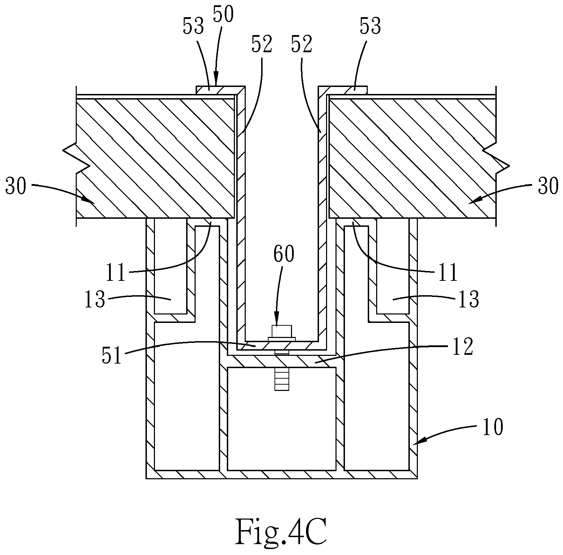

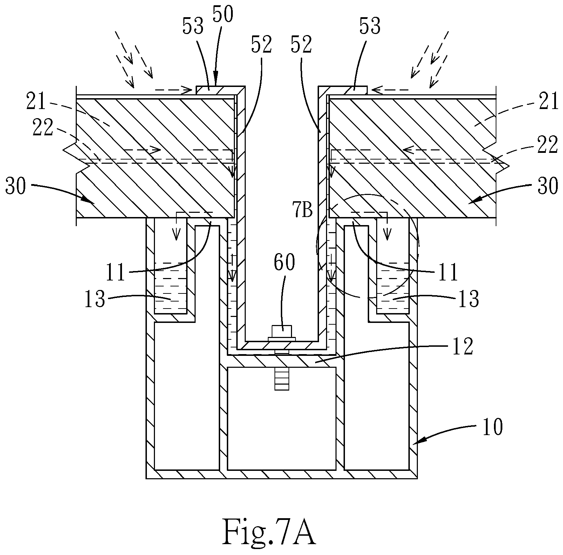

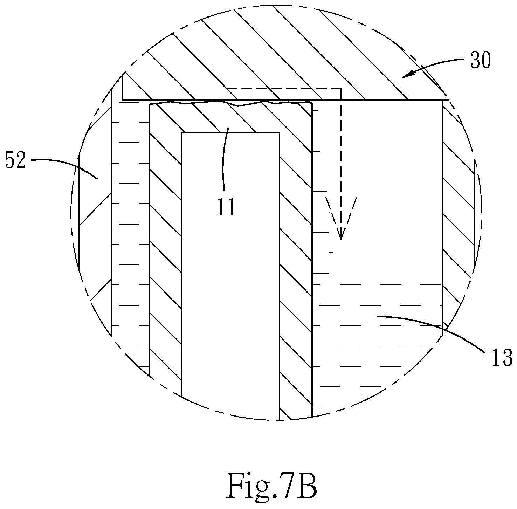

Referring to FIG. 3B and FIG. 4C, the second waterproof fixing unit 50 includes a fixing portion 51, two second extending portions 52 and two press portions 53. The fixing portion 51 is disposed corresponding to the connect section 12 of the support unit 10. The plurality of second extending portions 52 respectively extend from two ends of the fixing portion 51, and the second extending portion 52 extends roughly to a position of a top surface of the solar panel module 30. Each of the press portions 53 protrudes from the second extending portion 52 along the top surface of the solar panel module 30 and limits the solar panel module 30; wherein the plurality of second waterproof fixing units 50 of this embodiment do not abut the spacing units 20. please refer to FIG. 7B, a gap is left between the second waterproof fixing unit 50 and the spacing unit 20 as well as the spacing unit 20 and the solar panel module 30, so that gaps are formed between the support section 11 and the spacing unit 20 or the support section 11 and the solar panel module 30. Therefore, an end of each of the second drainage channels 21 communicates with the first drainage channel 13 through the gap, and rainwater will flow downward from the end of the second drainage channels 21 then flow into the first drainage channel 13 through the gap.

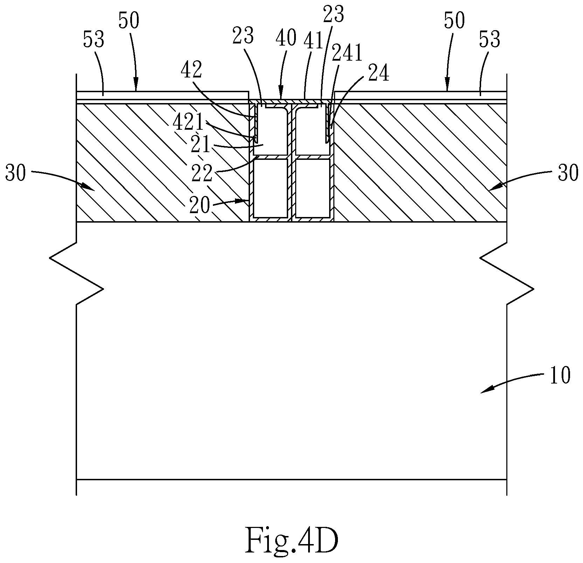

Referring to FIG. 4E, when a side of the solar panel module 30 is provided with only one of the spacing units 20, the first waterproof fixing unit 40 is only disposed with the engaging portion 421 at the end of one of the first extending portions 42 for engaging on the limit portion 241 of the spacing unit 20. Referring to FIG. 4D, when a side of the solar panel module 30 is provided with the two spacing units 20, the first waterproof fixing unit 40 is respectively disposed with the engaging portion 421 at the end of the plurality of first extending portions 42, so that the engaging portion 421 is engaged with the limit portion 241 of the different spacing units 20.

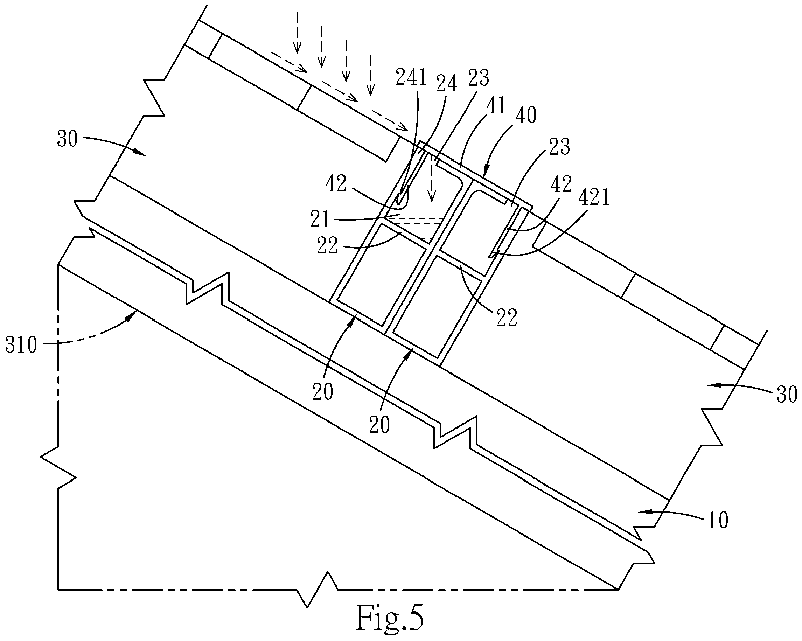

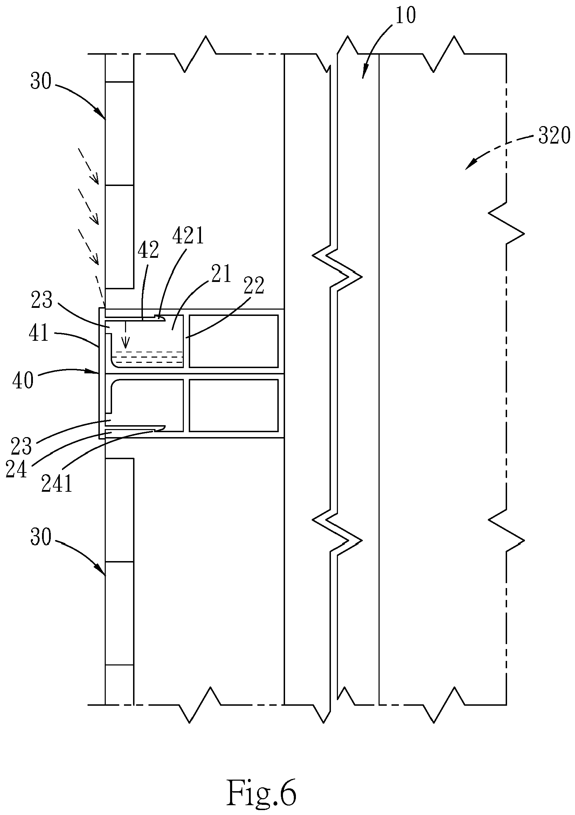

Please refer to FIG. 5, which is a schematic view of the state of use of an embodiment of the present invention being disposed on the roof top surface 310 of the building 300. When it rains, rainwater (as indicated by the dotted arrows) slides toward a lower place along the inclination of the solar panel module 30, and it may seep in from a joint between the plate 41 of the first waterproof fixing unit 40 and the solar panel module 30. At this time, the infiltrated rainwater will enter the second drainage channel 21 from the opening 23 of the spacing unit 20. Please refer to FIG. 7A and FIG. 7B, the rainwater entering the second drainage channel 21 flows into the communicated first drainage channel 13 from a gap at the end of the second drainage channel 21 as the direction of the dotted line, so that the rainwater in the first drainage channel 13 will flow to a lower portion of the first drainage channel 13 to be discharged, or the rainwater can be directly discharged from the second drainage channel 21. Therefore, the rainwater is directly dropped to the roof top surface 310 of the building 300 without penetrating into the house. Please refer to FIG. 6, which is a schematic view of the state of use of an embodiment of the present invention being disposed on the vertical wall surface 320 of the building 300. When it rains, the rainwater slides toward a lower place along the solar panel module 30, and it may seep in from a joint between the plate 41 of the first waterproof fixing unit 40 and the solar panel module 30. At this time, the infiltrated rainwater will enter the second drainage channel 21 from the opening 23 of the spacing unit 20. Please refer to FIG. 7A and FIG. 7B again, after entering the first drainage channel 13 with a direction described as the dotted line from the gap at the end of the second drainage channel 21, the second drainage channel 21 is not shown as figure, the rainwater will then flow to a lower portion of the first drainage channel 13 to be discharged, or the rainwater can be directly discharged from the second drainage channel 21. Therefore, the rainwater is directly dropped to the wall surface 320 of the building 300 without penetrating into the house to achieve a waterproof effect.

## Claims

1. A waterproof structure for solar panel roof and solar panel wall (100), disposed on a roof top surface (310) and a wall surface (320) of a building (300), comprising:
a plurality of support units (10), each of the plurality of support units (10) being disposed along a first direction (Y), the plurality of support units (10) including two support sections (11), a connecting section (12) connected between the two support sections (11) and closer to the roof top surface (310) and the wall surface (320) of the building (300) than the two support sections (11), and at least one first drainage channel (13), and the first drainage channel (13) being connected to a side of the support section (11) opposite to the connecting section (12);
a plurality of spacing units (20), each of the plurality of spacing units (20) disposed on any adjacent two of the plurality of support units (10) along a second direction (X), each of the plurality of spacing units (20) including at least one second drainage channel (21) and a opening (23), the opening (23) being disposed along the second direction (X) and communicating with the second drainage channel (21), wherein the first direction (Y) and the second direction (X) crisscross with each other, and the plurality of support units (10) and the plurality of spacing units (20) form a plurality of accommodating spaces (70) of a matrix arrangement;
a plurality of solar panel modules (30), the plurality of solar panel modules (30) being accommodated in the corresponding accommodating spaces (70) and abutting the plurality of support units (10) and the plurality of spacing units (20);
a plurality of first waterproof fixing units (40), each of the plurality of first waterproof fixing units (40) comprising a plate (41) and two first extending portions (42) respectively protruding and extending from a same side of the plate (41), wherein at least one of the first extending portions (42) is formed with an engaging portion (421) at an end of the first extending portion (42) opposite to the plate (41);
a plurality of second waterproof fixing units (50) disposed on the plurality of support units (10), clamping and pressing the solar panel modules (30) accommodated in the accommodating spaces (70); and
a plurality of fastening units (60) fastening the plurality of second waterproof fixing units (50) to the plurality of connecting sections (12) of the plurality of support units (10);
wherein a side wall (24) of the spacing unit (20) adjacent to the opening (23) and the solar panel module (30), and the side wall (24) is provided with a limit portion (241), wherein the limit portion (241) and the engaging portion (421) of the first waterproof fixing unit (40) abut against each other to form a fixing structure.

2. The waterproof structure for solar panel roof and solar panel wall (100) as claimed in claim 1, wherein the second waterproof fixing unit (50) comprises a fixing portion (51), two second extending portions (52) and at least one press portion (53), the fixing portion (51) is disposed corresponding to the connecting section (12) of the support unit (10), the plurality of second extending portions (52) are respectively extended from two ends of the fixing portion (51) to a position of a top surface of the solar panel module (30), and the press portion (53) protrudes from the second extending portion (52) along the top surface of the solar panel module (30) and limits the solar panel module (30).

3. The waterproof structure for solar panel roof and solar panel wall (100) as claimed in claim 1 or 2, wherein an end of each of the plurality of second drainage channels (21) connects with the first drainage channel (13).

4. The waterproof structure for solar panel roof and solar panel wall (100) as claimed in one of the preceding claims, wherein the limit portion (241) is a stepped difference formed by the side wall (24) of the spacing unit (20) being further recessed toward the solar panel module (30).

5. The waterproof structure for solar panel roof and solar panel wall (100) as claimed in claim 4, wherein the engaging portion (421) forms a barb corresponding to the stepped difference corresponding to the limit portion (241).

6. The waterproof structure for solar panel roof and solar panel wall (100) as claimed in one of the preceding claims, wherein two of the spacing units (20) are disposed between the solar panel modules (30) along the first direction (Y).

7. The waterproof structure for solar panel roof and solar panel wall (100) as claimed in claim 6, wherein each of the two first extending portions (42) of the first waterproof fixing unit (40) forms the engaging portion (421) at an end of the first extending portions opposite to the plate (41), and the plurality of engaging portions (421) respectively abut the limit portion (241) of the plurality of spacing units (20).

8. The waterproof structure for solar panel roof and solar panel wall (100) as claimed in one of the preceding claims, wherein the second drainage channel (21) is further provided with a reinforcing rib (22).
